# FASCICULE DE BREVET EUROPEEN

(11) **EP 3 492 376 B1**
(45) Date de publication et mention de la délivrance du brevet: **08.07.2020**
(21) Numéro de dépôt: 18201298.9
(22) Date de dépôt: 18.10.2018
(51) Int. Cl.: B64C 27/26, B64C 5/02

(54) **GIRAVION DE TYPE HYBRIDE COMPORTANT UN EMPENNAGE HORIZONTAL ET DEUX DERIVES AGENCEES SUR L'EMPENNAGE HORIZONTAL**
HYBRIDES DREHFLÜGELFLUGZEUG MIT EINEM HÖHENLEITWERK UND ZWEI AUF DIESEM HÖHENLEITWERK ANGEORDNETEN HÖHENFLOSEN
HYBRID TYPE ROTORCRAFT COMPRISING A HORIZONTAL TAIL AND TWO VERTICAL STABILISERS ARRANGED ON THE HORIZONTAL TAIL

(30) Priorité: 30.11.2017 FR 1771290
(43) Date de publication de la demande: 05.06.2019
(73) Titulaire: Airbus Helicopters, 13725 Marignane Cedex (FR); ONERA (Office National d'Etudes et de Recherches Aérospatiales), 91120 Palaiseau (FR)
(72) Inventeur: EGLIN, Paul, 13830 ROQUEFORT LA BEDOULE (FR); FUKARI, Raphaël, 13740 LE ROVE (FR); HUOT, Rémy, 13008 MARSEILLE (FR); PINACHO, Jean-Paul, 13940 MOLLEGES (FR); LIENARD, Caroline, 92150 SURESNES (FR); SALAH EL DIN, Itham, 92190 MEUDON (FR)
(74) Mandataire: GPI & Associés

(56) Documents cités:
- EP-A1- 2 733 066
- FR-A1- 2 937 302
- US-A- 2 940 693

## Description

Le projet ayant mené à la rédaction de cette demande de brevet a reçu un financement du programme de recherche et d'innovation Horizon 2020 de l'Union européenne, dans le cadre de la convention de subvention CleanSky 2 N° « GAM-FRC-2014-001 Issue E » et de l'ITD AIRFRAME Amendment N° « Grant Agreement CSJU-CS2-GAM-AIR-2014-15-01 Annex 1 - Issue B04 - Date : 02/10/2015 ».

La présente invention se rapporte au domaine des giravions de type hybride. De tels giravions comportent un rotor principal permettant de réaliser la sustentation voire la propulsion du giravion et au moins deux hélices pour assurer une force de propulsion supplémentaire à celle produite par le rotor principal.

Le demandeur a notamment décrit un tel type de giravion hybride dans le document FR 2 916 418. Ce document présente en effet un hélicoptère hybride dont la propulsion est assurée par deux hélices entraînées par les deux turbomoteurs, une hélice étant disposée à chaque extrémité externe d'une aile et formant un élément propulseur pour assurer tout ou partie de la propulsion du giravion.

Par ailleurs, un tel document décrit, au voisinage de l'extrémité arrière du fuselage, des surfaces de stabilisation et de manœuvre à savoir pour la profondeur, un empennage horizontal avec deux gouvernes de profondeur mobiles par rapport à une partie avant et pour la direction deux dérives, chacune des dérives étant agencée d'un côté de l'empennage horizontal. En l'occurrence, l'empennage horizontal et les dérives forment un U renversé vers le bas.

Toujours selon le document FR 2 916 418, de telles dérives peuvent être agencées verticalement ou de façon inclinée par rapport à la verticale.

Cependant, lorsque ces dérives sont agencées de façon inclinée par rapport à la verticale, une extrémité libre des dérives s'écarte d'un plan médian antéropostérieur du giravion tandis qu'une autre extrémité est solidaire de l'empennage horizontal. Une telle forme de U renversé peut alors être source de problèmes vibratoires dus aux interactions des écoulements aérodynamiques en provenance du rotor principal, du fuselage, avec l'empennage et les dérives notamment, notés ci-après "couplages".

Par ailleurs, il est également connu, et tel que décrit par le demandeur dans le document EP 2 733 066, d'équiper un giravion de type hybride avec un empennage horizontal sur lequel sont agencées deux dérives verticales gauche/droite comportant respectivement chacune une ailette de dérive inférieure positionnée verticalement en dessous de l'empennage horizontal et une ailette de dérive supérieure positionnée verticalement au-dessus de l'empennage horizontal.

Cependant, si ce type d'empennage en forme de H permet effectivement d'éloigner les dérives d'un plan médian antéropostérieur du giravion qui est fortement perturbé par le sillage du fuselage, des capots moteurs et la tête du rotor principal, cela implique pour l'empennage horizontal de présenter une grande envergure. En outre, une telle envergure peut s'avérer inutile pour assurer la stabilisation voire même être source de problèmes de comportement et générer une interaction à basse vitesse qui tend à faire relever le nez du giravion au-delà des limites de visibilité du pilote résultant d'un impact du flux aérodynamique du rotor principal sur l'empennage. Ce type d'interaction à basse vitesse est généralement désigné par l'expression "bosse d'assiette".

Par ailleurs tel que décrit dans le document US 2 940 693, il est également connu des giravions comportant des empennages en forme de H présentant des ailettes de dérive inférieures, ou alternativement des ailettes de dérive supérieures, mobiles en rotation par rapport à l'empennage horizontal.

Dans ce cas, un tel agencement mobile des ailettes de dérive supérieures est combiné avec un agencement fixe des ailettes de dérive inférieures. Cet agencement fixe des ailettes de dérive inférieures est par ailleurs parallèle à un plan médian antéropostérieur de symétrie du giravion.

En outre l'agencement mobile des ailettes de dérive supérieures permet un positionnement haut de l'empennage horizontal, au dessus d'une poutre de queue, et évite tout risque de collision entre les pales du rotor principal et des extrémités libres des ailettes de dérive supérieures.

Inversement, l'agencement mobile des ailettes de dérive inférieures est quant à lui combiné avec un agencement fixe des ailettes de dérive supérieures. Cet agencement fixe des ailettes de dérive supérieures est par ailleurs également parallèle à un plan médian antéropostérieur de symétrie du giravion.

Selon cette autre variante, l'agencement mobile des ailettes de dérive inférieures permet un positionnement bas de l'empennage horizontal, en dessous de la poutre de queue, et évite tout risque de collision entre le sol et des extrémités libres des ailettes de dérive inférieures.

Cependant, comme précédemment pour les empennages en forme de H, un tel agencement implique une grande envergure pour l'empennage horizontal. Ainsi, une telle envergure peut être source de problèmes de comportement et générer une interaction à basse vitesse qui tend à faire relever le nez du giravion au-delà des limites de visibilité du pilote. Un tel agencement mobile des ailettes supérieures (ou inférieures) ne permet donc pas de fournir une solution pour éviter que l'empennage ne perturbe le flux aérodynamique généré par le rotor principal.

La présente invention a alors pour objet de proposer un giravion permettant de s'affranchir des limitations mentionnées ci-dessus. En outre, le giravion conforme à l'invention permet de réduire, voire d'éviter, les problèmes vibratoires précités propres aux empennages en forme de U renversé qui peuvent être potentiellement source de décollement de l'écoulement aérodynamique à la jonction entre les dérives et l'empennage horizontal.

Un autre but de l'invention est de limiter l'envergure de l'empennage horizontal pour stabiliser de façon optimale le giravion sans générer d'interaction à basse vitesse de type bosse d'assiette.

L'invention se rapporte donc à un giravion de type hybride comportant :
- un rotor principal assurant au moins tout ou partie d'une sustentation du giravion,
- au moins deux éléments propulseurs assurant tout ou partie d'une propulsion du giravion, les deux éléments propulseurs étant montés respectivement chacun sur une demi-aile, les demi-ailes étant agencées symétriquement de part et d'autre d'un plan médian antéropostérieur XOZ de symétrie de tout ou partie du giravion, le plan médian antéropostérieur XOZ s'étendant entre une zone avant et une zone arrière du giravion suivant une direction longitudinale X et entre une zone inférieure et une zone supérieure du giravion suivant une direction en élévation Z,
- un empennage horizontal agencé dans la zone arrière du giravion de part et d'autre du plan médian antéropostérieur XOZ, et
- deux dérives agencées respectivement de part et d'autre du plan médian antéropostérieur XOZ, les deux dérives consistant en une dérive gauche positionnée au niveau d'une zone distale gauche de l'empennage horizontal et une dérive droite positionnée au niveau d'une zone distale droite de l'empennage horizontal, chacune des deux dérives gauche/droite comportant une ailette de dérive inférieure gauche/droite agencée en dessous de l'empennage horizontal et une ailette de dérive supérieure gauche/droite agencée au-dessus de l'empennage horizontal, les deux ailettes de dérive inférieure/supérieure gauches et les deux ailettes de dérive inférieure/supérieure droites étant rigidement solidarisées avec l'empennage horizontal.

Selon l'invention, un tel giravion est remarquable en ce que l'ailette de dérive inférieure gauche se rapproche de l'ailette de dérive supérieure gauche depuis leurs jonctions respectives avec l'empennage horizontal et l'ailette de dérive inférieure droite se rapproche de l'ailette de dérive supérieure droite depuis leurs jonctions respectives avec l'empennage horizontal, les deux ailettes de dérive inférieure/supérieure gauches s'écartant en tout ou partie au moins au niveau de leurs extrémités libres du plan médian antéropostérieur XOZ et les deux ailettes de dérive inférieure/supérieure droites s'écartant en tout ou partie et au moins au niveau de leurs extrémités libres du plan médian antéropostérieur XOZ.

Autrement dit, pour chaque dérive gauche/droite, les ailettes de dérive supérieure et inférieure ne s'étendent pas de façon parallèle par rapport au plan médian antéropostérieur XOZ. Ces deux ailettes de dérive supérieure et inférieure s'écartent du plan médian antéropostérieur XOZ et permettent ainsi de limiter l'envergure de l'empennage horizontal.

En outre un tel agencement permet également de réduire, voire d'éviter, les problèmes de décollement des écoulements aérodynamiques au niveau des jonctions entre les deux dérives et l'empennage horizontal, une réduction de la trainée aérodynamique du giravion et de réaliser une optimisation de l'ensemble de stabilisation arrière en termes de surface et de masse.

Avantageusement, dans un plan transversal YOZ perpendiculaire au plan médian antéropostérieur XOZ et sécant avec les deux dérives, chacune des quatre ailettes de dérive inférieure/supérieure et gauche/droite peut comporter une première extrémité solidaire de l'empennage horizontal et une extrémité libre, les extrémités libres des deux ailettes de dérive inférieure/supérieure gauches formant avec les premières extrémités des deux ailettes de dérive inférieure/supérieure gauches un dièdre d'angle compris entre 90 degrés et 175 degrés et les extrémités libres des deux ailettes de dérive inférieure/supérieure droites formant avec les premières extrémités des deux ailettes de dérive inférieure/supérieure droites un dièdre d'angle compris entre 90 degrés et 175 degrés.

En d'autre terme, pour chaque dérive gauche/droite, les deux ailettes de dérive inférieure/supérieure se rapprochent l'une de l'autre en formant un angle de 90 degrés à 175 degrés dans le plan transversal YOZ.

En pratique, l'extrémité libre de l'ailette de dérive inférieure gauche/droite peut s'écarter respectivement d'un plan P/P' parallèle au plan médian antéropostérieur XOZ et passant par la première extrémité de l'ailette de dérive inférieure gauche/droite en formant un angle d'inclinaison compris entre 5 degrés et 45 degrés.

Un tel angle d'inclinaison de l'ailette de dérive inférieure gauche/droite permet en effet de limiter l'envergure de l'empennage horizontal en réduisant, voire en supprimant, les problèmes de couplage.

De même, l'extrémité libre de l'ailette de dérive supérieure gauche/droite peut s'écarter respectivement d'un plan P/P' parallèle au plan médian antéropostérieur XOZ et passant par la première extrémité de l'ailette de dérive supérieure gauche/droite en formant un angle d'inclinaison compris entre 5 degrés et 45 degrés.

Il ressort également qu'un tel angle d'inclinaison de l'ailette de dérive supérieure gauche/droite permet aussi de limiter l'envergure de l'empennage horizontal en réduisant, voire en supprimant, les problèmes de couplage.

Selon un exemple de réalisation avantageux de l'invention, l'ailette de dérive inférieure gauche/droite peut être respectivement distincte de l'ailette de dérive supérieure gauche/droite.

En outre, l'ailette de dérive inférieure gauche/droite peut comporter une inclinaison selon respectivement le plan P/P', une longueur ou encore un vrillage qui est différent de l'inclinaison selon respectivement le plan P/P', de la longueur ou du vrillage de l'ailette de dérive supérieure gauche/droite. De plus, l'ailette de dérive inférieure gauche/droite et l'ailette de dérive supérieure gauche/droite peuvent également être formées par deux pièces différentes et ne formant pas un ensemble monolithique.

Avantageusement, une projection orthogonale de chacune des deux dérives respectivement sur un plan P/P' parallèle au plan médian antéropostérieur XOZ et passant par l'une des premières extrémités des quatre ailettes de dérive inférieure/supérieure et gauche/droite peut présenter une forme de flèche comportant une pointe orientée vers la zone avant du giravion.

En effet, une telle forme de flèche des projections orthogonales des deux dérives sur respectivement les plans P/P' permet d'augmenter un bras de levier par rapport au centre de gravité du giravion et ainsi d'améliorer la stabilité du contrôle en lacet de ce giravion.

En pratique, la pointe de chaque projection orthogonale peut coopérer respectivement avec une zone distale gauche/droite de l'empennage horizontal.

Autrement dit, chaque pointe des formes de flèche des projections orthogonales des deux dérives respectivement sur le plan P/P' peut être positionnée suivant la direction en élévation Z au niveau de l'empennage horizontal et chaque ailette de dérive supérieure/inférieure et gauche/droite s'étendre vers la zone arrière du giravion suivant la direction longitudinale X.

Selon un exemple de réalisation avantageux de l'invention, l'empennage horizontal peut être agencé symétriquement par rapport au plan médian antéropostérieur XOZ.

Une telle symétrie de l'empennage horizontal peut en effet être adaptée pour des certaines variantes de giravions de type hybride et notamment pour les giravions aptes à atteindre des vitesses de croisière importantes qui peuvent typiquement atteindre, voire dépasser, les 200kts (nœuds).

Selon un autre exemple de réalisation de l'invention, l'empennage horizontal peut être agencé asymétriquement par rapport au plan médian antéropostérieur XOZ.

Par suite, l'empennage horizontal peut présenter des dimensions en longueur suivant la direction (OY), en épaisseur suivant la direction (OZ) et en largeur suivant la direction (OX) qui sont respectivement différentes les unes des autres de part et d'autre du plan médian antéropostérieur XOZ.

De même, selon une première variante de l'invention, les deux dérives peuvent être agencées symétriquement par rapport au plan médian antéropostérieur XOZ.

Cependant, selon une seconde variante de l'invention, les deux dérives peuvent également être agencées asymétriquement par rapport au plan médian antéropostérieur XOZ.

Dans ce cas, par exemple les dimensions, les formes et les orientations angulaires de la dérive gauche peuvent être respectivement différentes de celles de la dérive droite.

L'invention et ses avantages apparaîtront avec plus de détails dans le cadre de la description qui suit avec des exemples donnés à titre illustratif, mais non limitatif, en référence aux figures annexées qui représentent :
- la figure 1, une vue de côté selon une première variante d'un giravion conforme à l'invention,
- la figure 2, une vue de face selon la première variante de giravion conforme à l'invention,
- la figure 3, une vue de face selon une deuxième variante de giravion conforme à l'invention,
- la figure 4, une vue de face selon une troisième variante de giravion conforme à l'invention, et
- la figure 5, une vue de face selon une quatrième variante de giravion conforme à l'invention.

Les éléments présents dans plusieurs figures distinctes sont affectés d'une seule et même référence et bien entendu l'invention ne se limite pas aux seuls exemples illustrés schématiquement à titre indicatif avec des valeurs angulaires qui peuvent être représentées de façon non limitative dans les dessins. En effet, pour l'inclinaison ou l'orientation des différentes dérives, les valeurs angulaires ainsi que les plages de valeurs angulaires à prendre en considération sont celles de la description données ci-dessous.

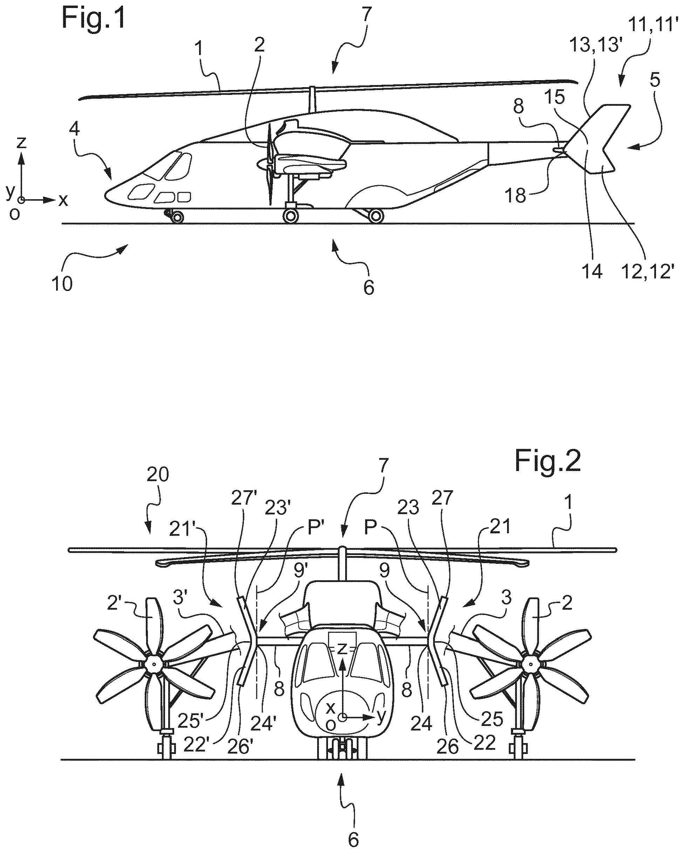

On note que trois directions X, Y et Z orthogonales les unes par rapport aux autres sont représentées sur les figures 1 à 5.

La direction X est dite longitudinale dans la mesure où il s'étend le long d'une dimension longitudinale vers une zone arrière d'un fuselage d'un giravion conforme à l'invention.

Une autre direction Y est dite transversale et s'étend perpendiculairement par rapport à l'axe X suivant sensiblement une dimension transversale vers la gauche du fuselage du giravion conforme à l'invention.

Enfin, un troisième axe Z est dit en élévation et correspond aux dimensions en hauteur du fuselage du giravion conforme à l'invention.

Comme déjà évoqué l'invention se rapporte donc à un giravion de type hybride.

Tel que représenté aux figures 1 à 5, un tel giravion 10-50 comporte ainsi un rotor principal 1 permettant de réaliser au moins tout ou partie de la sustentation voire la propulsion éventuelle partielle du giravion 10-50 et deux éléments propulseurs 2, 2' montés sur deux demi-ailes 3, 3', ces deux éléments propulseurs 2, 2' permettant quant à eux d'assurer une propulsion supplémentaire du giravion 10-50. Les deux demi-ailes 3, 3' peuvent ainsi avantageusement être agencées symétriquement de part et d'autre d'un plan médian antéropostérieur XOZ de symétrie du giravion 10-50 et sont partiellement masquées sur les figures 2 à 5 afin de faciliter la visualisation en vue de face des différentes variantes de giravion 10-50.

En outre, un tel plan médian antéropostérieur XOZ s'étend entre une zone avant 4 et une zone arrière 5 du giravion 10-50 suivant une direction longitudinale X et entre une zone inférieure 6 et une zone supérieure 7 du giravion 10-50 suivant une direction en élévation Z.

Le giravion 10-50 comporte aussi un empennage horizontal 8, 28 agencé au niveau de la zone arrière 5 du giravion 10-50 de part et d'autre du plan médian antéropostérieur XOZ. Un tel empennage horizontal 8 peut alors être avantageusement symétrique par rapport au plan médian antéropostérieur XOZ.

Telles que représentées, deux dérives 11-51, 11'-51' sont également agencées respectivement de part et d'autre du plan médian antéropostérieur XOZ et avantageusement de telles dérives 11-41, 11'-41' peuvent être symétriques par rapport au plan médian antéropostérieur XOZ.

Une dérive gauche 11-51 est ainsi positionnée au niveau d'une zone distale gauche 9 de l'empennage horizontal 8, 28 et une dérive droite 11'-51' est quant à elle positionnée au niveau d'une zone distale droite 9' de l'empennage horizontal 8, 28.

Chacune des dérives gauche/droite 11-51, 11'-51' comporte alors une ailette de dérive inférieure gauche/droite 12-52, 12'-52' agencée en dessous de l'empennage horizontal 8, 28 et une ailette de dérive supérieure gauche/droite 13-53, 13'-53' agencée au dessus de l'empennage horizontal 8, 28.

Par ailleurs telle que représentée à la figure 1, une projection orthogonale de la dérive 11 sur le plan P parallèle au plan médian antéropostérieur XOZ peut présenter une forme de flèche dont la pointe 18, orientée vers la zone avant du giravion, coopère avec la zone distale 9 de l'empennage horizontal 8.

Telle que représentée à la figure 2, la première variante de giravion 20 comporte une dérive gauche 21 et une dérive droite 21' présentant respectivement chacune une ailette de dérive supérieure gauche/droite 23, 23' s'écartant en totalité respectivement des plans P/P' en s'éloignant du plan médian antéropostérieur XOZ.

Par ailleurs, dans un plan transversal YOZ perpendiculaire au plan médian antéropostérieur XOZ et sécant avec les deux dérives 21 et 21', une première extrémité 25, 25' des deux ailettes de dérive supérieures gauche/droite 23, 23' est solidaire de la zone distale gauche/droite 9, 9' par lequel passe respectivement le plan P/P'. Une extrémité libre 27 de l'ailette de dérive supérieure gauche 23 s'écarte quant à elle vers la gauche du plan P et une extrémité libre 27' de l'ailette de dérive supérieure droite 23' s'écarte quant à elle vers la droite du plan P'.

De même toujours selon la première variante de giravion 20, les deux ailettes de dérive inférieures gauche/droite 22, 22' s'écartent en totalité respectivement des plans P/P' en s'éloignant du plan médian antéropostérieur XOZ. Une première extrémité 24, 24' des deux ailettes de dérive inférieures gauche/droite 22, 22' est solidaire de la zone distale gauche/droite 9, 9' par laquelle passe respectivement le plan P/P'. Une extrémité libre 26 de l'ailette de dérive inférieure gauche 22 s'écarte quant à elle vers la gauche du plan P et une extrémité libre 26' de l'ailette de dérive inférieure droite 22' s'écarte quant à elle vers la droite du plan P'.

Ainsi, les extrémités libres 26, 27 des deux ailettes de dérive inférieure/supérieure gauches 22, 23 peuvent former avec les premières extrémités 24, 25 des deux ailettes de dérive inférieure/supérieure gauches 22, 23 un dièdre d'angle compris entre 90 degrés et 175 degrés. De même, les extrémités libres 26', 27' des deux ailettes de dérive inférieure/supérieure droites 22', 23' peuvent former avec les premières extrémités 24', 25' des deux ailettes de dérive inférieure/supérieure droites 22', 23' un dièdre d'angle compris entre 90 degrés et 175 degrés.

De plus, l'extrémité libre 27, 27' de l'ailette de dérive supérieure gauche/droite 23, 23' peut s'écarter respectivement d'un plan P/P' parallèle au plan médian antéropostérieur XOZ et passant par la première extrémité 25, 25' de l'ailette de dérive supérieure gauche/droite 23, 23' en formant un angle d'inclinaison compris entre 5 degrés et 45 degrés. Tel que représenté à titre d'exemple sur la figure 2, cet angle est voisin de 20 degrés et orienté de façon opposée au plan médian antéropostérieur XOZ.

De même, l'extrémité libre 26, 26' de l'ailette de dérive inférieure gauche/droite 22, 22' peut s'écarter respectivement d'un plan P/P' parallèle au plan médian antéropostérieur XOZ et passant par la première extrémité 24, 24' de l'ailette de dérive inférieure gauche/droite 22, 22' en formant un angle d'inclinaison compris entre 5 degrés et 45 degrés. Tel que représenté à titre d'exemple sur la figure 2, cet angle est également voisin de 20 degrés.

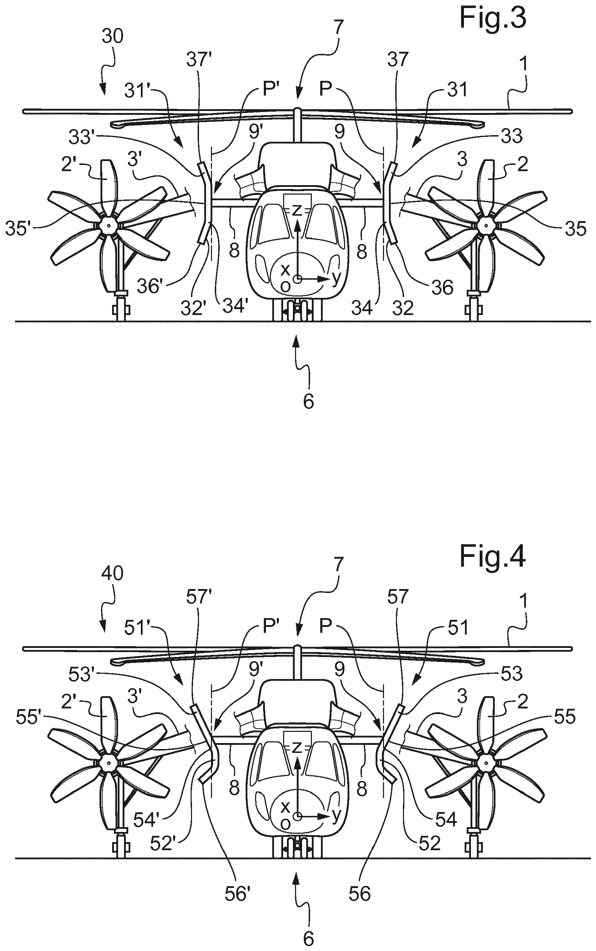

Telle que représentée à la figure 3, la deuxième variante de giravion 30 est remarquable en ce que le giravion 30 comporte une dérive gauche 31 et une dérive droite 31' présentant respectivement chacune une ailette de dérive supérieure gauche/droite 33, 33' s'écartant partiellement respectivement des plans P/P' en s'éloignant du plan médian antéropostérieur XOZ.

Par suite, dans un plan transversal YOZ perpendiculaire au plan médian antéropostérieur XOZ et sécant avec les deux dérives 31 et 31', une première extrémité 35, 35' des deux ailettes de dérive supérieures gauche/droite 33, 33' est solidaire de la zone distale gauche/droite 9, 9' par lequel passe respectivement le plan P/P'. Une extrémité libre 37 de l'ailette de dérive supérieure gauche 33 s'écarte quant à elle vers la gauche du plan P et une extrémité libre 37' de l'ailette de dérive supérieure droite 33' s'écarte quant à elle vers la droite du plan P'.

Selon cette deuxième variante de giravion 30, chaque dérive 31, 31' comporte également une ailette de dérive inférieure gauche/droite 32, 32' s'écartant partiellement respectivement des plans P/P' en s'éloignant du plan médian antéropostérieur XOZ. Une première extrémité 34, 34' des deux ailettes de dérive inférieures gauche/droite 32, 32' est solidaire de la zone distale gauche/droite 9, 9' par lequel passe respectivement le plan P/P'. Une extrémité libre 36 de l'ailette de dérive inférieure gauche 32 s'écarte quant à elle vers la gauche du plan P et une extrémité libre 36' de l'ailette de dérive inférieure droite 32' s'écarte quant à elle vers la droite du plan P'.

En outre, les extrémités libres 36, 37 des deux ailettes de dérive inférieure/supérieure gauches 32, 33 peuvent former avec les premières extrémités 34, 35 des deux ailettes de dérive inférieure/supérieure gauches 32, 33 un dièdre d'angle compris entre 90 degrés et 175 degrés. De même, les extrémités libres 36', 37' des deux ailettes de dérive inférieure/supérieure droites 32', 33' peuvent former avec les premières extrémités 34', 35' des deux ailettes de dérive inférieure/supérieure droites 32', 33' un dièdre d'angle compris entre 90 degrés et 175 degrés.

De plus, l'extrémité libre 37, 37' de l'ailette de dérive supérieure gauche/droite 33, 33' peut s'écarter respectivement d'un plan P/P' parallèle au plan médian antéropostérieur XOZ et passant par la première extrémité 35, 35' de l'ailette de dérive supérieure gauche/droite 33, 33' en formant un angle d'inclinaison compris entre 5 degrés et 45 degrés. Tel que représenté à titre d'exemple sur la figure 3, cet angle est voisin de 20 degrés et orienté de façon opposée au plan médian antéropostérieur XOZ.

De même, l'extrémité libre 36, 36' de l'ailette de dérive inférieure gauche/droite 32, 32' peut s'écarter respectivement d'un plan P/P' parallèle au plan médian antéropostérieur XOZ et passant par la première extrémité 34, 34' de l'ailette de dérive inférieure gauche/droite 32, 32' en formant un angle d'inclinaison compris entre 5 degrés et 45 degrés. Tel que représenté à titre d'exemple sur la figure 3, cet angle est voisin de 20 degrés et orienté de façon opposée au plan médian antéropostérieur XOZ.

Telle que représentée à la figure 4, une troisième variante de giravion 40 est remarquable en ce que le giravion 40 comporte une dérive gauche 41 et une dérive droite 41' présentant respectivement chacune une ailette de dérive supérieure gauche/droite 43, 43' s'écartant totalement respectivement des plans P/P' en s'éloignant du plan médian antéropostérieur XOZ.

En outre, dans un plan transversal YOZ perpendiculaire au plan médian antéropostérieur XOZ et sécant avec les deux dérives 41 et 41', une première extrémité 45, 45' des deux ailettes de dérive supérieures gauche/droite 43, 43' est solidaire de la zone distale gauche/droite 9, 9' par lequel passe respectivement le plan P/P'. Une extrémité libre 47 de l'ailette de dérive supérieure gauche 43 s'écarte quant à elle vers la gauche du plan P et une extrémité libre 47' de l'ailette de dérive supérieure droite 43' s'écarte quant à elle vers la droite du plan P'.

De même, le giravion 40 comporte une dérive gauche 41 et une dérive droite 41' présentant respectivement chacune une ailette de dérive inférieure gauche/droite 42, 42' s'écartant respectivement du plan médian antéropostérieur XOZ. Une première extrémité 44, 44' des deux ailettes de dérive inférieures gauche/droite 42, 42' est solidaire de la zone distale gauche/droite 9, 9' par lequel passe respectivement le plan P/P'. Une extrémité libre 46 de l'ailette de dérive inférieure gauche 42 s'écarte quant à elle vers la gauche du plan P et une extrémité libre 46' de l'ailette de dérive inférieure droite 42' s'écarte quant à elle vers la droite du plan P'.

Par suite, les extrémités libres 46, 47 des deux ailettes de dérive inférieure/supérieure gauches 42, 43 peuvent former avec les premières extrémités 44, 45 des deux ailettes de dérive inférieure/supérieure gauches 42, 43 un dièdre d'angle compris entre 90 degrés et 175 degrés. De même, les extrémités libres 46', 47' des deux ailettes de dérive inférieure/supérieure droites 42', 43' peuvent former avec les premières extrémités 44', 45' des deux ailettes de dérive inférieure/supérieure droites 42', 43' un dièdre d'angle compris entre 90 degrés et 175 degrés.

De plus, l'extrémité libre 47, 47' de l'ailette de dérive supérieure gauche/droite 43, 43' peut s'écarter respectivement d'un plan P/P' parallèle au plan médian antéropostérieur XOZ et passant par la première extrémité 45, 45' de l'ailette de dérive supérieure gauche/droite 43, 43' en formant un angle d'inclinaison compris entre 5 degrés et 45 degrés. Tel que représenté à titre d'exemple sur la figure 4, cet angle est voisin de 25 degrés et orienté de façon opposée au plan médian antéropostérieur XOZ.

De même, l'extrémité libre 46, 46' de l'ailette de dérive inférieure gauche/droite 42, 42' peut s'écarter respectivement d'un plan P/P' parallèle au plan médian antéropostérieur XOZ et passant par la première extrémité 44, 44' de l'ailette de dérive inférieure gauche/droite 42, 42' en formant un angle d'inclinaison compris entre 5 degrés et 45 degrés. Tel que représenté à titre d'exemple sur la figure 4, cet angle est voisin de 15 degrés et orienté de façon opposée au plan médian antéropostérieur XOZ.

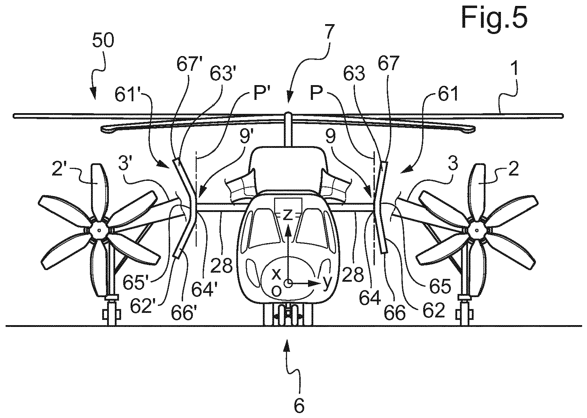

Telle que représentée à la figure 5, la quatrième variante de giravion 50 comporte une dérive gauche 51 et une dérive droite 51' présentant respectivement des formes, des dimensions et des orientations angulaires distinctes l'une de l'autre. Une ailette de dérive supérieure gauche 53, une ailette de dérive inférieure gauche 52, une ailette de dérive supérieure droite 53' et une ailette de dérive inférieure droite 52' s'écartant en totalité respectivement des plans P/P' en s'éloignant du plan médian antéropostérieur XOZ.

Par ailleurs, dans un plan transversal YOZ perpendiculaire au plan médian antéropostérieur XOZ et sécant avec les deux dérives 51 et 51', une première extrémité 55 de l'ailette de dérive supérieure gauche 53 et une première extrémité 54' de l'ailette de dérive inférieure droite 52' sont respectivement solidaires de la zone distale gauche/droite 9, 9' par lequel passe respectivement le plan P/P'. De même, une première extrémité 54 de l'ailette de dérive inférieure gauche 52 et une première extrémité 55' de l'ailette de dérive supérieure droite 53' sont respectivement solidaires de la zone distale gauche/droite 9, 9' par laquelle passe respectivement le plan P/P'.

En outre, une extrémité libre 57 de l'ailette de dérive supérieure gauche 53 et une extrémité libre 56 de l'ailette de dérive inférieure gauche 52 s'écartent quant à elles vers la gauche du plan P. De même, une extrémité libre 56' de l'ailette de dérive inférieure droite 52' et une extrémité libre 57' de l'ailette de dérive supérieure droite 53' s'écartent quant à elles vers la droite du plan P'.

Ainsi, les extrémités libres 56, 57 des deux ailettes de dérive inférieure/supérieure gauches 52, 53 peuvent former avec les premières extrémités 54, 55 des deux ailettes de dérive inférieure/supérieure gauches 52, 53 un dièdre d'angle compris entre 90 degrés et 175 degrés. De même, les extrémités libres 56', 57' des deux ailettes de dérive inférieure/supérieure droites 52', 53' peuvent former avec les premières extrémités 54', 55' des deux ailettes de dérive inférieure/supérieure droites 52', 53' un dièdre d'angle compris entre 90 degrés et 175 degrés.

De plus, l'extrémité libre 57 de l'ailette de dérive supérieure gauche 53 et l'extrémité libre 56' de l'ailette de dérive inférieure droite 52' peuvent s'écarter respectivement d'un plan P/P' parallèle au plan médian antéropostérieur XOZ passant par la première extrémité 55 de l'ailette de dérive supérieure gauche 53 et respectivement par la première extrémité 54' de l'ailette de dérive inférieure droite 52' en formant un angle d'inclinaison compris entre 5 degrés et 45 degrés. Tel que représenté à titre d'exemple sur la figure 5, cet angle est voisin de 10 degrés pour l'ailette de dérive supérieure gauche 53 et pour l'ailette de dérive inférieure gauche 52 et voisin de 25 degrés pour l'ailette de dérive inférieure droite 52' et pour l'ailette de dérive supérieure droite 53' et sont orientés de façon opposée par rapport au plan médian antéropostérieur XOZ.

Toujours suivant la quatrième variante de giravion 50, l'empennage horizontal 28 peut être asymétrique par rapport au plan médian antéropostérieur XOZ. Tel que représenté, l'empennage 28 peut ainsi comporter, suivant la direction (OY), une dimension en longueur gauche qui est inférieure à une dimension en longueur droite.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Giravion (10-50) de type hybride comportant :
• un rotor principal (1) assurant au moins tout ou partie d'une sustentation dudit giravion (10-50),
• au moins deux éléments propulseurs (2, 2') assurant tout ou partie d'une propulsion dudit giravion (10-50), lesdits deux éléments propulseurs (2, 2') étant montés respectivement chacun sur une demi-aile (3, 3'), lesdites demi-ailes (3, 3') étant agencées symétriquement de part et d'autre d'un plan médian antéropostérieur XOZ de symétrie de tout ou partie dudit giravion (10-50), ledit plan médian antéropostérieur XOZ s'étendant entre une zone avant (4) et une zone arrière (5) dudit giravion (10-50) suivant une direction longitudinale X et entre une zone inférieure (6) et une zone supérieure (7) dudit giravion (10-50) suivant une direction en élévation Z,
• un empennage horizontal (8, 28) agencé dans ladite zone arrière (5) dudit giravion (10-50) de part et d'autre dudit plan médian antéropostérieur XOZ, et
• deux dérives (11-51, 11'-51') agencées respectivement de part et d'autre dudit plan médian antéropostérieur XOZ, lesdites deux dérives (11-51, 11'-51') consistant en une dérive gauche (11-51) positionnée au niveau d'une zone distale gauche (9) dudit empennage horizontal (8, 28) et une dérive droite (11'-51') positionnée au niveau d'une zone distale droite (9') dudit empennage horizontal (8, 28), chacune desdites deux dérives gauche/droite (11-51, 11'-51') comportant une ailette de dérive inférieure gauche/droite (12-52, 12'-52') agencée en dessous dudit empennage horizontal (8, 28) et une ailette de dérive supérieure gauche/droite (13-53, 13'-53') agencée au-dessus dudit empennage horizontal (8, 28), lesdites deux ailettes de dérive inférieure/supérieure gauches (12-52, 13-53) et lesdites deux ailettes de dérive inférieure/supérieure droites (12'-52', 13'-53') étant rigidement solidarisées avec ledit empennage horizontal (8, 28)
**caractérisé en ce que** ladite ailette de dérive inférieure gauche (12-52) se rapproche de ladite ailette de dérive supérieure gauche (13-53) depuis leurs jonctions respectives avec ledit empennage horizontal (8, 28) et ladite ailette de dérive inférieure droite (12'-52') se rapproche de ladite ailette de dérive supérieure droite (13'-53') depuis leurs jonctions respectives avec ledit empennage horizontal (8, 28), lesdites deux ailettes de dérive inférieure/supérieure gauches (12-52, 13-53) s'écartant en tout ou partie, au moins au niveau de leurs extrémités libres (16-56, 17-57), dudit plan médian antéropostérieur XOZ et lesdites deux ailettes de dérive inférieure/supérieure droites (12'-52', 13'-53') s'écartant en tout ou partie, au moins au niveau de leurs extrémités libres (16'-56', 17'-57'), dudit plan médian antéropostérieur XOZ.

2. Giravion selon la revendication 1,
**caractérisé en ce que**, dans un plan transversal YOZ perpendiculaire au plan médian antéropostérieur XOZ et sécant avec lesdits deux dérives (11-51) et (11'-51'), chacune desdites quatre ailettes de dérive inférieure/supérieure et gauche/droite (12-52, 13-53, 12'-52', 13'-53') comporte une première extrémité (14-54, 14'-54', 15-55, 15'-55') solidaire dudit empennage horizontal (8, 28) et une extrémité libre (16-56, 16'-56', 17-57, 17'-57'), lesdites extrémités libres (16-56, 17-57) desdites deux ailettes de dérive inférieure/supérieure gauches (12-52, 13-53) formant avec lesdites premières extrémités (14-54, 15, 55) desdites deux ailettes de dérive inférieure/supérieure gauches (12-52, 13-53) un dièdre d'angle compris entre 90 degrés et 175 degrés et lesdites extrémités libres (16'-56', 17'-57') desdites deux ailettes de dérive inférieure/supérieure droites (12'-52', 13'-53') formant avec lesdites premières extrémités (14'-54', 15'-55') desdites deux ailettes de dérive inférieure/supérieure droites (12'-52', 13'-53') un dièdre d'angle compris entre 90 degrés et 175 degrés.

3. Giravion selon la revendication 2,
**caractérisé en ce que** ladite extrémité libre (16-56, 16'-56') de ladite ailette de dérive inférieure gauche/droite (12-52, 12'-52') s'écarte respectivement d'un plan P/P' parallèle au plan médian antéropostérieur XOZ et passant par ladite première extrémité (14-54, 14'-54') de ladite ailette de dérive inférieure gauche/droite (12-52, 12'-52') en formant un angle d'inclinaison compris entre 5 degrés et 45 degrés.

4. Giravion selon l'une quelconque des revendications 2 à 3, **caractérisé en ce que** ladite extrémité libre (17-57, 17'-57') de ladite ailette de dérive supérieure gauche/droite (13-53, 13'-53') s'écarte respectivement d'un plan P/P' parallèle au plan médian antéropostérieur XOZ et passant par ladite première extrémité (15-55, 15'-55') de ladite ailette de dérive supérieure gauche/droite (13-53, 13'-53') en formant un angle d'inclinaison compris entre 5 degrés et 45 degrés.

5. Giravion selon l'une quelconque des revendications 1 à 4, **caractérisé en ce que** ladite ailette de dérive inférieure gauche/droite (12-52, 12'-52') est respectivement distincte de ladite ailette de dérive supérieure gauche/droite (13-53, 13'-53').

6. Giravion selon l'une quelconque des revendications 1 à 5, **caractérisé en ce qu'**une projection orthogonale de chacune desdites deux dérives (11, 11') respectivement sur un plan P/P' parallèle au plan médian antéropostérieur XOZ et passant par l'une desdites premières extrémités (14, 14', 15, 15') desdites quatre ailettes de dérive inférieure/supérieure et gauche/droite (12, 13, 12', 13') présente une forme de flèche comportant une pointe (18) orientée vers ladite zone avant (4) dudit giravion (10).

7. Giravion selon la revendication 6,
**caractérisé en ce que** ladite pointe (18) de chaque projection orthogonale coopère respectivement avec une zone distale gauche/droite (9, 9') dudit empennage horizontal (8).

8. Giravion selon l'une quelconque des revendications 1 à 7, **caractérisé en ce que** ledit empennage horizontal (8) est agencé symétriquement par rapport audit plan médian antéropostérieur XOZ.

9. Giravion selon l'une quelconque des revendications 1 à 7, **caractérisé en ce que** ledit empennage horizontal (28) est agencé asymétriquement par rapport audit plan médian antéropostérieur XOZ.

10. Giravion selon l'une quelconque des revendications 1 à 9,
**caractérisé en ce que** lesdites deux dérives (11-41, 11'-41') sont agencées symétriquement par rapport audit plan médian antéropostérieur XOZ.

11. Giravion selon l'une quelconque des revendications 1 à 9,
**caractérisé en ce que** lesdites deux dérives (51, 51') sont agencées asymétriquement par rapport audit plan médian antéropostérieur XOZ.

## Patentansprüche

1. Drehflügelflugzeug (10-50) vom Hybridtyp mit:
einem Hauptrotor (1), der zumindest den gesamten oder einen Teil des Auftriebs des Drehflügelflugzeugs (10-50) bereitstellt,
mindestens zwei Vortriebselementen (2, 2'), die den gesamten oder einen Teil eines Vortriebs des Drehflügelflugzeugs (10-50) bereitstellen, wobei die beiden Vortriebselemente (2, 2') jeweils auf einem Halbflügel (3, 3') montiert sind, wobei die Halbflügel (3, 3') symmetrisch auf beiden Seiten einer Längsmittelebene XOZ der Symmetrie für das ganze Drehflügelflugzeug (10-50) oder einen Teil davon angeordnet sind, wobei sich die Längsmittelebene XOZ zwischen einer vorderen Zone (4) und einer hinteren Zone (5) des Drehflügelflugzeugs (10-50) in einer Längsrichtung X und zwischen einer unteren Zone (6) und einer oberen Zone (7) des Drehflügelflugzeugs (10-50) in einer Höhenrichtung Z erstreckt,
einem Höhenleitwerk (8, 28), das in der hinteren Zone (5) des Drehflügelflugzeugs (10-50) auf beiden Seiten der Längsmittelebene XOZ angeordnet ist, und
zwei Flossen (11-51, 11'-51'), die jeweils auf beiden Seiten der Längsmittelebene XOZ angeordnet sind, wobei die beiden Flossen (11-51, 11'-51') aus einer linken Flosse (11-51), die in einer linken distalen Bereich (9) des Höhenleitwerks (8, 28) positioniert ist, und einer rechten Flosse (11'-51'), die in einem rechten distalen Bereich (9') des Höhenleitwerks (8) angeordnet ist, bestehen, wobei jede der beiden linken/rechten Flossen (11-51, 11'-51') ein unteres linkes/rechtes Flossenteil (12-52, 12'-52'), das unterhalb des Höhenleitwerks (8, 28) angeordnet ist, und ein oberes linkes/rechtes Flossenteil (13-53, 13'-53'), das oberhalb des Höhenleitwerks (8, 28) angeordnet ist, aufweist, wobei die beiden linken unteren/oberen Flossenteile (12-52, 13-53) und die beiden rechten unteren/oberen Flossenteile (12'-52', 13'-53') starr mit dem Höhenleitwerk (8, 28) verbunden sind,
**dadurch gekennzeichnet, dass** das linke untere Flossenteil (12-52) sich dem linken oberen Flossenteil (13-53) von ihren jeweiligen Verbindungsstellen mit dem Höhenleitwerk (8, 28) aus nähert und das rechte untere Flossenteil (12'-52') sich dem rechten oberen Flossenteil (13'-53') von ihren jeweiligen Verbindungsstellen mit dem Höhenleitwerk (8, 28) aus nähert, dass die beiden linken unteren/oberen Flossenteile (12-52, 13-53) sich ganz oder teilweise, zumindest an ihren freien Enden (16-56, 17-57), von der Längsmittelebene XOZ entfernen und die beiden rechten unteren/oberen Flossenteile (12'-52', 13'-53') sich ganz oder teilweise, zumindest an ihren freien Enden (16'-56', 17'-57'), von der Längsmittelebene XOZ entfernen.

2. Drehflügelflugzeug nach Anspruch 1,
**dadurch gekennzeichnet, dass** in einer Querebene YOZ, die senkrecht zur Längsmittelebene XOZ verläuft und die beiden Flossen (11-51) und (11'-51') schneidet, jedes der vier unteren/oberen und linken/rechten Flossenteile (12-52, 13-53, 12'-52', 13'-53') ein erstes Ende (14-54, 14'-54', 15-55, 15'-55'), das mit dem Höhenleitwerk (8, 28) fest verbunden ist, und ein freies Ende (16-56, 16'-56', 17-57, 17'-57') aufweist, wobei die freien Enden (16-56, 17-57) der beiden linken unteren/oberen Flossenteile (12-52, 13-53) mit den ersten Enden (14-54, 15, 55) der beiden linken unteren/oberen Flossenteile (12-52, 13-53) einen Dieder mit einem Winkel zwischen 90 Grad und 175 Grad bilden, und die freien Enden (16'-56', 17'-57') der beiden rechten unteren/oberen Flossenteile (12'-52', 13'-53') mit den ersten Enden (14'-54', 15'-55') der beiden rechten unteren/oberen Flossenteile (12'-52', 13'-53') einen Dieder mit einem Winkel zwischen 90 Grad und 175 Grad bilden.

3. Drehflügelflugzeug nach Anspruch 2,
**dadurch gekennzeichnet, dass** das freie Ende (16-56, 16'-56') des linken/rechten unteren Flossenteils (12-52, 12'-52') jeweils von einer zur Längsmittelebene XOZ parallelen Ebene P/P' abweicht, die unter einem Neigungswinkel zwischen 5 Grad und 45 Grad durch das erste Ende (14-54, 14'-54') des linken/rechten unteren Flossenteils (12-52, 12'-52') verläuft.

4. Drehflügelflugzeug nach einem der Ansprüche 2 bis 3,
**dadurch gekennzeichnet, dass** das freie Ende (17-57, 17'-57') des linken/rechten oberen Flossenteils(13-53, 13'-53') jeweils von einer zur Längsmittelebene XOZ parallelen Ebene P/P' abweicht, die unter einem Neigungswinkel zwischen 5 Grad und 45 durch das erste Ende (15-55, 15'-55') des linken/rechten oberen Flossenteils (13-53, 13'-53') verläuft.

5. Drehflügelflugzeug nach einem der Ansprüche 1 bis 4,
**dadurch gekennzeichnet, dass** sich das untere linke/rechte Flossenteil (12-52, 12'-52') jeweils von dem oberen linken/rechten Flossenteil (13-53, 13'-53') unterscheidet.

6. Drehflügelflugzeug nach einem der Ansprüche 1 bis 5,
**dadurch gekennzeichnet, dass** eine orthogonale Projektion jeder der beiden Flossen (11, 11') jeweils auf eine zur Längsmittelebene XOZ parallele Ebene P/P', die durch eines der ersten Enden (14, 14', 15, 15') der vier unteren/oberen und linken/rechten Flossenteile (12, 13, 12', 13') verläuft, die Form eines Pfeils mit einer Spitze (18) aufweist, die auf die vordere Zone (4) des Drehflügelflugzeugs (10) ausgerichtet ist.

7. Drehflügelflugzeug nach Anspruch 6,
**dadurch gekennzeichnet, dass** die Spitze (18) jeder orthogonalen Projektion jeweils mit einem linken/rechten distalen Bereich (9, 9') des Höhenleitwerks (8) zusammenwirkt.

8. Drehflügelflugzeug nach einem der Ansprüche 1 bis 7,
**dadurch gekennzeichnet, dass** das Höhenleitwerk (8) symmetrisch in Bezug auf die Längsmittelebene XOZ angeordnet ist.

9. Drehflügelflugzeug nach einem der Ansprüche 1 bis 7,
**dadurch gekennzeichnet, dass** das Höhenleitwerk (8) asymmetrisch in Bezug auf die Längsmittelebene XOZ angeordnet ist.

10. Drehflügelflugzeug nach einem der Ansprüche 1 bis 7,
**dadurch gekennzeichnet, dass** die beiden Flossen (11-41, 11'-41') symmetrisch in Bezug auf die Längsmittelebene XOZ angeordnet sind.

11. Drehflügelflugzeug nach einem der Ansprüche 1 bis 7,
**dadurch gekennzeichnet, dass** die beiden Flossen (11-41, 11'-41') asymmetrisch in Bezug auf die Längsmittelebene XOZ angeordnet sind.

## Claims

1. Hybrid-type rotorcraft (10-50), comprising:
• a main rotor (1) providing at least all or part of a lift of said rotorcraft (10-50),
• at least two propulsion elements (2, 2') providing all or part of a propulsion of said rotorcraft (10-50), said two propulsion elements (2, 2') each being mounted on a particular half-wing (3, 3'), said half-wings (3, 3') being arranged symmetrically on either side of an anteroposterior median plane XOZ of symmetry of all or part of said rotorcraft (10-50), said anteroposterior median plane XOZ extending between a front region (4) and a rear region (5) of said rotorcraft (10-50) in a longitudinal direction X and between a lower region (6) and an upper region (7) of said rotorcraft (10-50) in an elevation direction Z,
• a horizontal stabiliser (8, 28) arranged in said rear region (5) of said rotorcraft (10-50) on either side of said anteroposterior median plane XOZ, and
• two fins (11-51, 11'-51') arranged on respective sides of said anteroposterior median plane XOZ, said two fins (11-51, 11'-51') consisting of a left fin (11-51) positioned at the level of a left distal region (9) of said horizontal stabiliser (8, 28) and a right fin (11'-51') positioned at the level of a right distal region (9') of said horizontal stabiliser (8, 28), each of said two left/right fins (11-51, 11'-51') comprising a lower left/right fin aerofoil (12-52, 12'-52') arranged below said horizontal stabiliser (8, 28) and an upper left/right fin aerofoil (13-53, 13'-53') arranged above said horizontal stabiliser (8, 28), said two left lower/upper fin aerofoils (12-52, 13-53) and said two right lower/upper fin aerofoils (12'-52', 13'-53') being rigidly secured to said horizontal stabiliser (8, 28),
**characterised in that** said lower left fin aerofoil (12-52) approaches said upper left fin aerofoil (13-53) from its particular joining point with said horizontal stabiliser (8, 28) and said lower right fin aerofoil (12'-52') approaches said upper right fin aerofoil (13'-53') from its particular joining point with said horizontal stabiliser (8, 28), said two left lower/upper fin aerofoils (12-52, 13-53) deviating completely or partly, at least at their free ends (16-56, 17-57), from said anteroposterior median plane XOZ and said two right lower/upper fin aerofoils (12'-52', 13'-53') deviating completely or partly, at least at their free ends (16'-56', 17'-57'), from said anteroposterior median plane XOZ.

2. Rotorcraft according to claim 1, **characterised in that**, in a transverse plane YOZ perpendicular to the anteroposterior median plane XOZ and intersecting with said two fins (11-51) and (11'-51'), each of said four lower/upper and left/right fin aerofoils (12-52, 13-53, 12'-52', 13'-53') has a first end (14-54, 14'-54', 15-55, 15'-55') which is integral with said horizontal stabiliser (8, 28) and a free end (16-56, 16'-56', 17-57, 17'-57'), said free ends (16-56, 17-57) of said two left lower/upper fin aerofoils (12-52, 13-53) forming, with said first ends (14-54, 15, 55) of said two left lower/upper fin aerofoils (12-52, 13-53), a dihedral angle between 90 degrees and 175 degrees and said free ends (16'-56', 17'-57') of said two right lower/upper fin aerofoils (12'-52', 13'-53') forming, with said first ends (14'-54', 15'-55') of said two right lower/upper fin aerofoils (12'-52', 13'-53'), a dihedral angle between 90 degrees and 175 degrees.

3. Rotorcraft according to claim 2, **characterised in that** said free end (16-56, 16'-56') of said lower left/right fin aerofoil (12-52, 12'-52') deviates from a plane P/P', respectively, that is parallel to the anteroposterior median plane XOZ and passes through said first end (14-54, 14'-54') of said lower left/right fin aerofoil (12-52, 12'-52') so as to form an angle of inclination between 5 degrees and 45 degrees.

4. Rotorcraft according to either claim 2 or claim 3, **characterised in that** said free end (17-57, 17'-57') of said upper left/right fin aerofoil (13-53, 13'-53') deviates from a plane P/P', respectively, that is parallel to the anteroposterior median plane XOZ and passes through said first end (15-55, 15'-55') of said upper left/right fin aerofoil (13- 53, 13'-53') so as to form an angle of inclination between 5 degrees and 45 degrees.

5. Rotorcraft according to any of claims 1 to 4, **characterised in that** said lower left/right fin aerofoil (12-52, 12'-52') is distinct from said upper left/right fin aerofoil (13-53, 13-53'), respectively.

6. Rotorcraft according to any of claims 1 to 5, **characterised in that** an orthogonal projection of each of said two fins (11, 11') on a plane P/P', respectively, that is parallel to the anteroposterior median plane XOZ and passes through one of said first ends (14, 14', 15, 15') of said four lower/upper and left/right fin aerofoils (12, 13, 12', 13') has the shape of an arrow comprising a point (18) oriented towards said front region (4) of said rotorcraft (10).

7. Rotorcraft according to claim 6, **characterised in that** said point (18) of each orthogonal projection cooperates with a particular left/right distal region (9, 9') of said horizontal stabiliser (8).

8. Rotorcraft according to any of claims 1 to 7, **characterised in that** said horizontal stabiliser (8) is arranged symmetrically with respect to said anteroposterior median plane XOZ.

9. Rotorcraft according to any of claims 1 to 7, **characterised in that** said horizontal stabiliser (28) is arranged asymmetrically with respect to said anteroposterior median plane XOZ.

10. Rotorcraft according to any of claims 1 to 9, **characterised in that** said two fins (11-41, 11'-41') are arranged symmetrically with respect to said anteroposterior median plane XOZ.

11. Rotorcraft according to any of claims 1 to 9, **characterised in that** said two fins (51, 51') are arranged asymmetrically with respect to said anteroposterior median plane XOZ.
